# EUROPÄISCHE PATENTSCHRIFT

(11) **EP 3 424 117 B1**
(45) Veröffentlichungstag und Bekanntmachung des Hinweises auf die Patenterteilung: **12.05.2021**
(21) Anmeldenummer: 17707197.4
(22) Anmeldetag: 15.02.2017
(51) Int. Cl.: H02G 3/08, H02G 15/013, H02G 15/007

(54) **DICHTUNGSVORRICHTUNG UND VERFAHREN ZUR MONTAGE EINER DICHTUNGSVORRICHTUNG**
SEALING DEVICE AND METHOD FOR ASSEMBLING A SEALING DEVICE
DISPOSITIF D'ÉTANCHÉITÉ ET PROCÉDÉ DE MONTAGE D'UN DISPOSITIF D'ÉTANCHÉITÉ

(30) Priorität: 16.02.2016 DE 102016102671; 22.07.2016 DE 102016113549
(43) Veröffentlichungstag der Anmeldung: 09.01.2019
(73) Patentinhaber: Reichle & De-Massari AG, 8620 Wetzikon (CH)
(72) Erfinder: STEFANOV, Spas, 1336 Sofia (BG); GYAGANG, Tensing, Norbu, 8810 Horgen (CH); BACH, Tobias, 8344 Bäretswil (CH)
(74) Vertreter: Daub, Thomas
(86) Internationale Anmeldenummer: PCT/EP2017/053389
(87) Internationale Veröffentlichungsnummer: WO 2017/140720

(56) Entgegenhaltungen:
- EP-A1- 1 734 627
- WO-A1-2005/101603
- WO-A1-2007/132059
- WO-A1-2011/091824
- DE-U- 6 916 274
- US-A1- 2011 147 542

## Beschreibung

### Stand der Technik

Die Erfindung betrifft eine Dichtungsvorrichtung nach dem Oberbegriff des Anspruchs 1 sowie ein Verfahren zur Montage einer Dichtungsvorrichtung nach Anspruch 14.

Es sind bereits Kabeleinführungen mit elastischen Dichtungen bekannt, die eine Kabeldurchführung, durch welche ein Kabel dicht durchführbar ist, sowie einen parallel zu der Kabeldurchführung verlaufenden Einschnitt als Kabeleinführnut aufweisen. Zu einer Montage wird das Kabel durch den Einschnitt in die Kabeldurchführung eingelegt. Anschließend wird die Dichtung zusammengedrückt, wodurch der Einschnitt verschlossen wird, indem seine beiden Schnittflächen gegeneinander gedrückt werden.

Aus der EP 1 734 627 A1, sowie der WO 2007/132059 A1 sind Dichtkörper für Kabeldurchführungen bekannt.

Die Aufgabe der Erfindung besteht insbesondere darin, verbesserten Eigenschaften hinsichtlich einer hohen Dichtigkeit zu erzielen. Die Aufgabe wird erfindungsgemäß durch die Merkmale der Patentansprüche 1 und 14 gelöst, während vorteilhafte Ausgestaltungen und Weiterbildungen der Erfindung den Unteransprüchen entnommen werden können.

### Vorteile der Erfindung

Die Erfindung geht aus von einer Dichtungsvorrichtung, insbesondere einer Kabeldurchführungsdichtungsvorrichtung, zur Abdichtung eines durchgeführten länglichen Körpers eines Kabels, mit zumindest einer Dichteinheit, die zumindest ein erstes Dichtelement und zumindest ein zweites Dichtelement aufweist, welche sich in zumindest einem montierten Zustand zumindest teilweise berühren und welche gemeinsam zumindest eine Einführung ausbilden, die zu einem Einführen des länglichen Körpers in eine Einführrichtung senkrecht zu einer Längsrichtung des länglichen Körpers vorgesehen ist.

Es wird vorgeschlagen, dass das zweite Dichtelement zumindest eine Erhebung aufweist, welche die Einführung zumindest abschnittsweise begrenzt.

Vorteilhaft ist die Dichtungsvorrichtung zumindest ein Teil einer Kabeldurchführung und/oder einer Kabeleinführung. Es ist auch denkbar, dass die Dichtungsvorrichtung die gesamte Kabeldurchführung und/oder die gesamte Kabeleinführung umfasst und/oder ausbildet. Vorzugsweise ist die Dichtungsvorrichtung zu einem insbesondere dichten Ein- und/oder Durchführen von länglichen Körpern wie beispielsweise von, insbesondere elektrischen und/oder fiberoptischen Kabeln und/oder Schläuchen, vorteilhaft von elektrischen und/oder fiberoptischen Leitungen vorgesehen. Vorteilhaft ist die Dichtungsvorrichtung dazu vorgesehen, in einem montierten Zustand einen Schutz und/oder eine Dichtigkeit bereitzustellen, die zumindest einer IP55-Schutzziffer entspricht. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Vorteilhaft weist die Dichteinheit zumindest eine Durchführung für den länglichen Körper auf. Besonders vorteilhaft verläuft in zumindest einem montierten Zustand eine Haupterstreckungsrichtung der Durchführung zumindest im Wesentlichen parallel zu einer Haupterstreckungsrichtung des länglichen Körpers. Vorzugsweise bilden das erste Dichtelement und das zweite Dichtelement gemeinsam die Durchführung zumindest teilweise, insbesondere vollständig aus. Besonders bevorzugt weist die Dichteinheit zumindest eine Dichtfläche auf, welche in dem montierten Zustand zumindest abschnittsweise an dem länglichen Körper und insbesondere an dessen Oberfläche anliegt. Vorteilhaft ist die Dichtfläche mantelflächenartig ausgebildet. Besonders vorteilhaft ist die Dichtfläche als eine Mantelfläche, insbesondere eines Rotationskörpers ausgebildet. Vorteilhaft bildet die Dichtfläche einen Innenmantel der Durchführung aus. Vorzugsweise weist die Durchführung zumindest einen Querschnitt auf, der in dem montierten Zustand zumindest einem Querschnitt des länglichen Körpers entspricht. Besonders bevorzugt weist die Durchführung einen zumindest im Wesentlichen kreisförmigen Querschnitt auf. Unter einer "Haupterstreckungsrichtung" eines Objekts soll dabei insbesondere eine Richtung verstanden werden, welche parallel zu einer längsten Kante eines kleinsten gedachten Quaders verläuft, welcher das Objekt gerade noch vollständig umschließt. Unter "zumindest im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Darunter, dass ein Objekt einen "zumindest im Wesentlichen kreisförmigen Querschnitt" aufweist, soll dabei insbesondere verstanden werden, dass für wenigstens 60 %, vorteilhaft für wenigstens 70 %, besonders vorteilhaft für wenigstens 80 % und bevorzugt für wenigstens 90 % aller Querschnitte des Objekts entlang zumindest einer Richtung, ein Flächeninhalt einer Differenzfläche des Querschnitts und eines kleinsten den Querschnitt umgebenden Kreises maximal 30 %, vorteilhaft maximal 20 %, besonders vorteilhaft maximal 10 % und bevorzugt maximal 5 % des Flächeninhalts des Kreises, beträgt.

Grundsätzlich kann die Dichteinheit lediglich eine oder auch eine Mehrzahl von Durchführungen aufweisen, beispielsweise zwei oder drei oder vier oder fünf oder sechs oder sieben oder acht oder neun oder zehn oder 20 oder 30 oder 40 oder 50 oder mehr. Dabei ist denkbar, dass zumindest einige oder alle der Durchführungen zumindest im Wesentlichen identisch ausgebildet sind. Es ist aber auch denkbar, dass die Dichteinheit unterschiedliche Arten von Durchführungen, beispielsweise für längliche Körper mit unterschiedlichen Durchmessern oder Durchmesserbereichen aufweist. Vorzugsweise bilden alle Dichtelemente der Dichteinheit gemeinsam die Dichteinheit aus. Besonders bevorzugt bilden jeweils zwei Dichtelemente der Dichteinheit jeweils eine Durchführung der Dichteinheit aus.

Ferner ist denkbar, dass die Dichtungsvorrichtung lediglich eine oder auch eine Mehrzahl von Dichteinheiten aufweist, beispielsweise zwei oder drei oder vier oder fünf oder sechs oder sieben oder acht oder neun oder zehn oder 20 oder 30 oder 40 oder 50 oder mehr. Vorzugweise weist die Dichteinheit und/oder eine Gesamtheit aller Dichteinheiten und/oder eine Mehrzahl an Dichteinheiten und/oder jede der Dichteinheiten in dem montierten Zustand eine zumindest im Wesentlichen quaderförmige Außenkontur auf. Unter einem "zumindest im Wesentlichen quaderförmigen Objekt" soll dabei insbesondere ein Objekt mit der Eigenschaft verstanden werden, dass ein Differenzvolumen des Objekts und eines kleinsten das Objekt umgebenden Quaders maximal 30 %, vorteilhaft maximal 20 %, besonders vorteilhaft maximal 10 % und bevorzugt maximal 5 % des Volumens des Quaders beträgt.

Bevorzugt ist das erste Dichtelement und/oder das zweite Dichtelement makroskopisch und insbesondere elastisch verformbar. Besonders bevorzugt weist das erste Dichtelement und/oder das zweite Dichtelement zumindest ein, vorteilhaft genau ein elastisches Material auf und besteht besonders vorteilhaft aus dem elastischen Material. Vorteilhaft ist das elastische Material ein Gummi. Unter einem "makroskopisch verformbaren Objekt" soll dabei insbesondere ein Objekt verstanden werden, dessen Erstreckung entlang zumindest einer Richtung durch einen wirkenden Druck von höchstens 100 kN mm⁻², vorteilhaft von höchstens 10 kN mm⁻² und besonders vorteilhaft von höchstens 1 kN mm⁻² um wenigstens 1 %, vorteilhaft um wenigstens 5 %, besonders vorteilhaft um wenigstens 20 % und bevorzugt um wenigstens 50 % verändert werden kann, insbesondere beschädigungs- und/oder zerstörungsfrei.

Vorteilhaft ist die Erhebung als eine konvexe Wölbung ausgebildet. Besonders vorteilhaft weist zumindest ein Abschnitt der Erhebung und vorteilhaft die gesamte Erhebung einen zumindest im Wesentlichen konstanten Querschnitt auf. Es ist auch denkbar, dass die Erhebung einen sich verändernden, insbesondere sich verjüngenden Querschnitt aufweist. Vorzugsweise weist das erste Dichtungselement und/oder das zweite Dichtungselement eine Mehrzahl von, insbesondere in identischen Abständen zueinander angeordneten, vorteilhaft zumindest im Wesentlichen zu der Erhebung identischen Erhebungen auf, welche die Einführung zumindest abschnittsweise begrenzen. Unter "zumindest im Wesentlichen identisch" soll dabei insbesondere, abgesehen von Fertigungstoleranzen und/oder im Rahmen fertigungstechnischer Möglichkeiten, identisch verstanden werden. Darunter, dass ein Objekt einen "zumindest im Wesentlichen konstanten Querschnitt" aufweist, soll dabei insbesondere verstanden werden, dass für einen beliebigen ersten Querschnitt des Objekts entlang zumindest einer Richtung und einen beliebigen zweiten Querschnitt des Objekts entlang der Richtung ein minimaler Flächeninhalt einer Differenzfläche, die bei einem Übereinanderlegen der Querschnitte gebildet wird, maximal 20 %, vorteilhaft maximal 10 % und besonders vorteilhaft maximal 5 % des Flächeninhalts des größeren der beiden Querschnitte beträgt.

Vorteilhaft ist die Einführung als eine Einführnut ausgebildet. Besonders vorteilhaft ist die Einführung an einer Oberseite der Dichteinheit angeordnet. Es ist auch denkbar, dass die Einführung an einer linken und/oder rechten Seite der Dichteinheit angeordnet ist. Insbesondere verläuft die Einführrichtung zumindest im Wesentlichen senkrecht zu der Seite der Dichteinheit, auf welcher die Einführung angeordnet ist. Vorzugsweise bildet das erste Dichtelement, insbesondere eine Oberfläche des ersten Dichtelements eine erste Seitenwand der Einführung aus. Besonders bevorzugt bildet das zweite Dichtelement, insbesondere eine Oberfläche des zweiten Dichtelements, eine zweite Seitenwand der Einführung aus. Insbesondere bildet die Erhebung einen Teil der zweiten Seitenwand aus. Vorteilhaft erstreckt sich die erste Seitenwand und/oder die zweite Seitenwand zumindest im Wesentlichen parallel zu der Einführrichtung. Es ist auch denkbar, dass die Dichtelemente zu einer Montage voneinander entfernbar sind, um die Einführung auszubilden. Insbesondere in diesem Fall ist denkbar, dass die Dichteinheit zwei vorteilhaft gegenüberliegende Einführungen aufweist, die beispielsweise auf gegenüberliegenden Seiten der Durchführung angeordnet sind. Vorteilhaft ist ein Abstand zwischen dem ersten Dichtelement und dem zweiten Dichtelement zu einer Montage, insbesondere zumindest abschnittsweise, vergrößerbar, um vorteilhaft ein Einführen des länglichen Körpers in die Einführrichtung, insbesondere in die Durchführung, zu ermöglichen. Besonders vorteilhaft berührt die Erhebung das erste Dichtelement in zumindest einem vormontierten Zustand, in welchem eine Lage des länglichen Körpers einer Lage des länglichen Körpers in dem montierten Zustand entspricht. Unter einer "Lage" soll in diesem Zusammenhang insbesondere eine Position und/oder eine Orientierung verstanden werden. Vorzugsweise berührt die Erhebung das erste Dichtelement in dem vormontierten Zustand und/oder in dem montierten Zustand zumindest entlang einer Berührlinie, die zumindest im Wesentlichen senkrecht zu einer Längsrichtung des länglichen Körpers in dem montierten Zustand und/oder zumindest im Wesentlichen senkrecht zu einer Längsrichtung der Durchführung verläuft. Unter "zumindest im Wesentlichen senkrecht" soll hier insbesondere eine Ausrichtung einer Richtung relativ zu einer Bezugsrichtung, insbesondere in einer Bezugsebene, verstanden werden, wobei die Richtung und die Bezugsrichtung einen Winkel einschließen, der insbesondere weniger als 8°, vorteilhaft weniger als 5° und besonders vorteilhaft weniger als 2° von einem rechten Winkel abweicht.

Durch die erfindungsgemäße Ausgestaltung kann vorteilhaft eine hohe Dichtigkeit erzielt werden. Ferner können Kabel und/oder Schläuche mit verschiedenen und/oder variierenden Durchmessern dicht umschlossen werden. Außerdem kann gezielt an bestimmten Stellen eine optimierte Dichtigkeit erzielt werden. Weiterhin können vorteilhaft Beschädigungen und/oder Undichtigkeiten bei einem Dichten dicker Kabel und/oder Schläuche vermieden werden. Insbesondere kann eine flexibel einsetzbare Dichtung bereitgestellt werden. Ferner können Fertigungs- und/oder Installationstoleranzen vorteilhaft ausgeglichen werden. Weiterhin kann vorteilhaft ein variabel und gezielt anpassbares Baukastensystem, insbesondere für Kabeldurchführungen, bereitgestellt werden. Außerdem kann eine einfache und/oder zuverlässige und/oder wenig fehleranfällige Montierbarkeit erzielt werden.

In einer weiteren Ausgestaltung der Erfindung wird vorgeschlagen, dass das zweite Dichtelement dazu vorgesehen ist, das erste Dichtelement in dem montierten Zustand in einem vorzugsweise der Einführung zuwandten Bereich der Erhebung zumindest teilweise, vorteilhaft um wenigstens einige Millimeter zu verformen. Vorteilhaft ist die Erhebung dazu vorgesehen, in dem montierten Zustand gegen das erste Dichtelement gedrückt zu werden. Besonders vorteilhaft weist das erste Dichtelement zumindest eine insbesondere zu der Erhebung zumindest im Wesentlichen identisch ausgebildete weitere Erhebung auf. Vorzugsweise ist das erste Dichtelement dazu vorgesehen, das zweite Dichtelement in dem montierten Zustand in einem Bereich der weiteren Erhebung zumindest teilweise zu verformen. Besonders bevorzugt ist der Bereich der weiteren Erhebung verschieden von dem Bereich der Erhebung. Vorteilhaft weist das zweite Dichtelement eine Vielzahl von Erhebungen und/oder weist das erste Dichtelement eine Vielzahl von weiteren Erhebungen auf. Besonders vorteilhaft sind die Erhebungen insbesondere entlang der Längsrichtung der Durchführung nebeneinander angeordnet. Ferner sind vorteilhaft die weiteren Erhebungen insbesondere entlang der Längsrichtung der Durchführung nebeneinander angeordnet. Hierdurch kann vorteilhaft ein dichter Kontakt zwischen Dichtelementen erzielt werden.

Ferner wird vorgeschlagen, dass die Erhebung in zumindest einem unmontierten und vorzugsweise zusätzlich in dem vormontierten Zustand kreisbogenförmig gekrümmt ist. Vorteilhaft weist die Erhebung insbesondere in einer Betrachtung senkrecht zu einer Längsrichtung der Durchführung eine kreisbogenförmige Außenkontur auf. Insbesondere weist die Außenkontur einen Mittelpunktswinkel von wenigstens 10°, vorteilhaft von wenigstens 30°, besonders vorteilhaft von wenigstens 60° und vorzugsweise von wenigstens 80° und/oder einen Mittelpunktswinkel von höchstens 180°, vorteilhaft von höchstens 150°, besonders vorteilhaft von höchstens 120° und vorzugsweise von höchstens 100° und/oder einen Mittelpunktswinkel von zumindest im Wesentlichen, insbesondere von genau 90° auf. Unter "zumindest im Wesentlichen" soll in diesem Zusammenhang insbesondere verstanden werden, dass eine Abweichung von einem vorgegebenen Wert insbesondere weniger als 15 %, vorzugsweise weniger als 10 % und besonders bevorzugt weniger als 5 % des vorgegebenen Werts entspricht. Falls das erste Dichtelement und/oder das zweite Dichtelement verschiedene Erhebungen aufweisen, ist grundsätzlich denkbar, dass diese zumindest im Wesentlichen identisch oder auch unterschiedlich gekrümmt ausgebildet sind. Hierdurch können vorteilhafte Eigenschaften hinsichtlich eines Kontakts bei einem Dichten erzielt werden. Außerdem können Anpresskräfte bei einem Dichten präzise und/oder bedarfsweise angepasst werden.

Gemäß der Erfindung wird vorgeschlagen, dass das erste Dichtelement zumindest einen Ausgleichsbereich ausbildet, der eine höhere Verformbarkeit aufweist als ein Umgebungsbereich des Ausgleichsbereichs des ersten Dichtelements und der dazu vorgesehen ist, in dem montierten Zustand durch das zweite Dichtelement, insbesondere durch die Erhebung zumindest teilweise verformt zu werden. Vorzugsweise ist der Ausgleichsbereich der Erhebung zugeordnet. Der Ausgleichsbereich ist dazu vorgesehen, durch auf das erste Dichtelement wirkende Kräfte insbesondere des zweiten Dichtelements stärker verformt zu werden als der Umgebungsbereich und insbesondere als die Erhebung. Vorzugsweise weist das zweite Dichtelement einen analog, insbesondere zumindest im Wesentlichen identisch ausgebildeten weiteren Ausgleichsbereich auf, der dazu vorgesehen ist, in dem montierten Zustand durch das erste Dichtelement, insbesondere durch die weitere Erhebung, zumindest teilweise verformt zu werden. Vorteilhaft weist der Ausgleichsbereich insbesondere in einer Betrachtung senkrecht zu der Längsrichtung der Durchführung einen zumindest im Wesentlichen rechteckigen Querschnitt auf. Alternativ oder zusätzlich ist denkbar, dass der Ausgleichsbereich zumindest einen Querschnitt aufweist, dessen Außenkontur zumindest abschnittsweise an einen Verlauf der Einführung angepasst ist. Insbesondere ist der Ausgleichsbereich und/oder zumindest eine Außenkontur des Ausgleichsbereichs zumindest abschnittsweise in einem konstanten Abstand zu der Einführung angeordnet. Vorteilhaft verjüngt sich der Ausgleichsbereich, insbesondere entlang einer Richtung senkrecht zu der Längsrichtung der Durchführung. Vorteilhaft ist ein Abstand zwischen dem Ausgleichsbereich und/oder zumindest einer Außenkontur des Ausgleichsbereichs und der Durchführung zumindest im Wesentlichen konstant. Unter einem "zumindest im Wesentlichen konstanten Wert" soll in diesem Zusammenhang insbesondere ein Wert verstanden werden, der um höchstens 20 %, vorteilhaft um höchstens 15 %, besonders vorteilhaft um höchstens 10 % und bevorzugt um höchstens 5 % variiert. Hierdurch kann vorteilhaft eine auf einen zu dichtenden Körper wirkende Kraft reduziert werden. Ferner kann hierdurch eine hohe Dichtigkeit und/oder eine hohe Toleranz bezüglich verschiedener Durchmesser gedichteter Körper erzielt werden.

In einer besonders vorteilhaften Ausgestaltung der Erfindung wird vorgeschlagen, dass der Ausgleichsbereich in dem montierten Zustand betrachtet entlang einer Berührrichtung, in welcher das zweite Dichtelement das erste Dichtelement berührt, hinter der Erhebung angeordnet ist. Vorzugsweise verläuft die Berührrichtung zumindest im Wesentlichen senkrecht zu der Längsrichtung der Durchführung. Besonders bevorzugt verläuft die Berührrichtung zumindest im Wesentlichen senkrecht zu der Einführrichtung. Vorteilhaft verläuft die Berührrichtung zumindest im Wesentlichen senkrecht zu einer Oberfläche der Erhebung und/oder des ersten Dichtelements in einem Bereich der Einführung und/oder des zweiten Dichtelements in einem Bereich der Einführung. Insbesondere sind das erste Dichtelement und das zweite Dichtelement dazu vorgesehen, in dem montierten Zustand entlang der Berührrichtung gegeneinander gedrückt zu werden. Hierdurch kann vorteilhaft eine wirkende Kraft und/oder ein Druck gezielt an definierten Stellen reduziert und/oder bedarfsweise angepasst werden.

In einer bevorzugten Ausgestaltung der Erfindung wird vorgeschlagen, dass der Ausgleichsbereich wenigstens eine Materialausnehmung umfasst. Vorteilhaft ist der Ausgleichsbereich als ein Hohlraum ausgebildet. Besonders vorteilhaft ist der Ausgleichsbereich zu der Oberseite der Dichteinheit hin geöffnet ausgebildet. Hierdurch kann vorteilhaft eine kostengünstige Herstellbarkeit und/oder eine bauliche Einfachheit erzielt werden.

Weist die Dichteinheit mehr als eine Einführung auf, so sind vorteilhaft mittig angeordnete Ausgleichsbereiche jeweils zwei benachbarten Einführungen zugeordnet. Die entsprechenden Ausgleichsbereiche sind in diesem Fall von zwei Seiten her verformbar ausgebildet.

Grundsätzlich ist denkbar, dass die Dichteinheit einen oder mehrere weitere Ausgleichsbereiche aufweist, die insbesondere auf einer Rückseite und/oder einer linken Seite und/oder einer rechten Seite der Dichteinheit angeordnet sind. Vorteilhaft weist die Dichteinheit zu jedem einer Erhebung in einem Bereich der Einführung zugeordneten Ausgleichsbereich einen insbesondere spiegelsymmetrisch ausgebildeten zusätzlichen Ausgleichsbereich auf, der auf einer dem entsprechenden Ausgleichsbereich gegenüberliegenden Seite der Dichteinheit angeordnet ist. Beispielsweise können eine Oberseite und eine Unterseite der Dichteinheit insbesondere gleichartig mit einer Mehrzahl von Ausgleichsbereichen versehen sein. Hierdurch können insbesondere im Fall eines Kabels mit einem großen Durchmesser ein auftretender Druck reduziert und/oder Undichtigkeiten aufgrund eines hohen Drucks vermieden werden.

In einer vorteilhaften Ausgestaltung der Erfindung wird vorgeschlagen, dass die Einführung und insbesondere die erste Seitenwand und/oder insbesondere die zweite Seitenwand der Einführung in einer Betrachtung parallel zu der Einführrichtung insbesondere in einem unmontierten Zustand zumindest abschnittsweise einen kurvigen Verlauf aufweist. Vorzugsweise ist der Verlauf wellenartig ausgebildet. Besonders bevorzugt setzt sich der Verlauf aus vorteilhaft abwechselnd angeordneten konvexen und konkaven Kurvenabschnitten, insbesondere Kreisbögen zusammen. Vorteilhaft bilden das erste Dichtelement und das zweite Dichtelement jeweils eine gerillte Seitenwand der Einführung aus, die besonders vorteilhaft jeweils eine Mehrzahl von Erhebungen aufweist. Vorzugsweise sind die Erhebungen rippenartig ausgebildet. Hierdurch kann vorteilhaft eine hohe Dichtigkeit entlang einer Durchführrichtung eines Kabels oder Schlauchs erzielt werden.

In einer besonders vorteilhaften Ausgestaltung der Erfindung wird vorgeschlagen, dass der Verlauf zumindest einen ersten Teilverlauf mit einer ersten Krümmung und zumindest einen zweiten Teilverlauf mit einer zweiten Krümmung, welche kleiner als die erste Krümmung ist, aufweist. Vorzugsweise ist der erste Teilverlauf konvex gekrümmt. Besonders bevorzugt ist der zweite Teilverlauf konkav gekrümmt. Vorteilhaft entspricht der erste Verlauf einer Außenkontur der Erhebung in der Betrachtung parallel zu der Einführrichtung. Besonders vorteilhaft ist der erste Teilverlauf und/oder der zweite Teilverlauf als ein Kreisbogen, insbesondere mit einem Mittelpunktswinkel von zumindest im Wesentlichen, insbesondere genau 90° ausgebildet. Vorteilhaft berühren sich das erste Dichtelement und das zweite Dichtelement in dem vormontierten Zustand und/oder in dem montierten Zustand jeweils derart, dass ein Bereich des einen Dichtelements mit einer ersten Krümmung einen Bereich des anderen Dichtelements mit einer zweiten Krümmung, welche kleiner als die erste Krümmung ist, berührt. Insbesondere sind Erhebungen des einen Dichtelements demnach in Vertiefungen des anderen Dichtelements angeordnet. Vorteilhaft bildet die Erhebung einen dornartigen Vorsprung mit der ersten Krümmung, der in dem vormontierten und/oder in dem montierten Zustand einen Bereich mit der zweiten Krümmung des zweiten Dichtelements berührt. Besonders vorteilhaft ist der Verlauf frei von einem Knick. Hierdurch kann vorteilhaft eine Geometrie bereitgestellt werden, die eine hohe Dichtigkeit und/oder eine Anpassbarkeit an verschiedene Kabelstärken erlaubt.

Ferner wird vorgeschlagen, dass zumindest ein erster Abschnitt des ersten Dichtelements und zumindest ein zweiter Abschnitt des zweiten Dichtelements zueinander spiegelsymmetrisch und/oder punktsymmetrisch ausgebildet sind. Insbesondere sind in dem montierten Zustand der erste Abschnitt und der zweite Abschnitt entlang der Längsrichtung der Durchführung um einen halben Abstand zwischen zwei benachbarten Erhebungen des zweiten Dichtelements versetzt angeordnet. Es ist auch denkbar, dass in dem montierten Zustand der erste Abschnitt und der zweite Abschnitt unmittelbar gegenüberliegend angeordnet sind. Insbesondere ist in dem montierten Zustand zumindest eine Erhebung des ersten Dichtelements zumindest einer Erhebung des zweiten Dichtelements gegenüberliegend angeordnet. Vorzugsweise weisen der erste Abschnitt und der zweite Abschnitt jeweils zumindest eine, vorteilhaft zumindest zwei, beispielsweise drei oder vier oder fünf oder sechs oder sieben oder acht oder neun oder zehn oder 20 oder 30 oder 40 oder 50 oder mehr Erhebung/Erhebungen auf. Hierdurch kann vorteilhaft eine symmetrische Kraftverteilung erzielt werden.

Außerdem wird vorgeschlagen, dass das erste Dichtelement und das zweite Dichtelement die Durchführung für den länglichen Körper mit einem sich verjüngenden Querschnitt ausbilden. Vorteilhaft weist die Durchführung einen Querschnitt auf, der sich insbesondere entlang der Längsrichtung der Durchführung und vorteilhaft gleichmäßig und/oder linear verjüngt. Vorzugsweise ist die Durchführung kegelstumpfartig ausgebildet. Insbesondere ist ein kleinster Durchmesser der Durchführung um wenigstens einen Faktor 1,5, vorteilhaft um wenigstens einen Faktor 2 und besonders vorteilhaft um wenigstens einen Faktor 3 kleiner als ein größter Durchmesser der Durchführung. Beispielsweise kann die Durchführung einen kleinsten Durchmesser von etwa 3 mm und/oder einen größten Durchmesser von etwa 9 mm aufweisen. Ferner kann die Durchführung auch einen kleinsten Durchmesser von 9 mm und einen größten Durchmesser von 13 mm aufweisen. Auch ist denkbar, dass die Durchführung einen kleinsten Durchmesser von 2 mm und einen größten Durchmesser von 3 mm aufweist. Selbstverständlich sind auch andere Durchmesser denkbar. Vorteilhaft ist die Durchführung dazu vorgesehen, ein Durchführen von Kabeln mit einem Durchmesser aus einem bestimmten Durchmesserbereich und insbesondere ein Dichten dieser Kabel zu ermöglichen. Hierdurch kann vorteilhaft eine hohe Flexibilität hinsichtlich eines Montage erzielt werden. Außerdem können hierdurch vorteilhaft unterschiedlich dicke Kabel einfach und/oder sicher und/oder dicht geführt werden.

In einer weiteren Ausgestaltung der Erfindung wird vorgeschlagen, dass die Dichtfläche eine Oberflächenstrukturierung aufweist. Vorzugsweise erstreckt sich die Oberflächenstrukturierung über die gesamte Dichtfläche. Es ist aber auch denkbar, dass die Dichtfläche abschnittsweise glatt und abschnittsweise strukturiert ausgebildet ist. Vorteilhaft umfasst die Oberflächenstrukturierung zumindest ein rippenartiges Strukturelement, das sich vorteilhaft entlang eines Umfangs der Dichtfläche und insbesondere der Durchführung erstreckt. Besonders vorteilhaft weist die Oberflächenstrukturierung eine Mehrzahl insbesondere ringartig ausgebildeter Strukturelemente auf, die insbesondere entlang der Längsrichtung der Durchführung nebeneinanderliegend angeordnet sind. Vorzugsweise weisen die ringartigen Strukturelemente Innendurchmesser auf, die sich entsprechend dem verjüngenden Verlauf der Durchführung entlang der Längsrichtung der Durchführung verringern. Hierdurch kann vorteilhaft ein durchgeführtes Kabel in Umfangsrichtung zuverlässig gedichtet werden.

In einer vorteilhaften Ausgestaltung der Erfindung wird vorgeschlagen, dass die Dichteinheit einstückig ausgebildet ist. Insbesondere sind das erste Dichtelement und das zweite Dichtelement einstückig verbunden, insbesondere an einer der Oberseite gegenüberliegenden Unterseite der Dichteinheit. Vorzugsweise sind sämtliche Dichtelemente der Dichteinheit einstückig verbunden. Besonders bevorzugt ist die Dichteinheit aus einem einzigen Material, vorteilhaft aus einem Gummi, ausgebildet. Unter "einstückig" soll insbesondere zumindest stoffschlüssig verbunden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Hierdurch kann vorteilhaft eine schnelle und/oder kostengünstige Herstellung ermöglicht werden.

In einer besonders vorteilhaften Ausgestaltung der Erfindung wird vorgeschlagen, dass die Dichtungsvorrichtung zumindest eine Gehäuseeinheit aufweist, welche dazu vorgesehen ist, in dem montierten Zustand das erste Dichtelement und das zweite Dichtelement gegeneinander zu drücken. Vorteilhaft ist die Gehäuseeinheit zumindest im Wesentlich aus Kunststoff ausgebildet. Besonders vorteilhaft definiert die Gehäuseeinheit zumindest einen Aufnahmeraum für eine oder mehrere Dichteinheiten. Vorzugsweise ist der Aufnahmeraum quaderförmig ausgebildet. Besonders bevorzugt umfasst die Gehäuseeinheit zumindest eine Oberschale und zumindest eine Unterschale, die insbesondere rastend miteinander verbindbar sind. Vorzugsweise sind die Oberschale und die Unterschale dazu vorgesehen, nach einer Verbindung eine Kraft auf die Dichteinheit auszuüben, welche das erste Dichtelement und das zweite Dichtelement gegeneinander drückt. Insbesondere entspricht eine Breite und/oder Höhe des Aufnahmeraums einem ganzzahligen Vielfachen einer Breite und/oder Höhe der Dichteinheit. Vorzugsweise sind Dimensionen der Dichteinheit an Dimensionen der Gehäuseeinheit derart angepasst, dass bündige Anordnung einer oder mehrerer Dichteinheiten in dem Aufnahmeraum ermöglicht wird. Insbesondere können Dichteinheiten für unterschiedliche Kabel in derselben Gehäuseeinheit angeordnet werden, vorteilhaft nach Art eines Baukastensystems. Hierdurch kann eine Dichtungsvorrichtung individuell zusammengestellt und/oder an unterschiedliche Bedürfnisse angepasst werden. Außerdem kann hierdurch eine hohe Dichtigkeit erzielt werden.

Vorteilhafte Eigenschaften hinsichtlich einer hohen Dichtigkeit insbesondere im Fall unterschiedlich dicker zu dichtender Kabel kann mit einem Gehäuse, insbesondere einer Elektronikeinhausung und/oder einem Elektronikgehäuse, beispielsweise einem Schaltschrank mit zumindest einer erfindungsgemäßen Dichtungsvorrichtung erzielt werden.

Ferner betrifft die Erfindung ein Verfahren zur Montage einer Dichtungsvorrichtung, insbesondere einer Kabeldurchführungsdichtungsvorrichtung, mit zumindest einer Dichteinheit, die zumindest ein erstes Dichtelement und zumindest ein zweites Dichtelement aufweist, welche gemeinsam zumindest eine Einführung ausbilden, die zu einem Einführen eines länglichen Körpers eines Kabels in eine Einführrichtung senkrecht zu einer Längsrichtung des länglichen Körpers vorgesehen ist, wobei das zweite Dichtelement zumindest eine Erhebung aufweist, welche die Einführung zumindest abschnittsweise begrenzt, und wobei in zumindest einem zu einem montierten Zustand führenden Montageschritt das erste Dichtungselement und das zweite Dichtungselement gegeneinander gedrückt werden und sich zumindest teilweise berühren.

Die erfindungsgemäße Dichtungsvorrichtung sowie das erfindungsgemäße Verfahren sollen hierbei nicht auf die oben beschriebene Anwendung und Ausführungsform beschränkt sein. Insbesondere kann die erfindungsgemäße Dichtungsvorrichtung zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Gehäuse mit einer Dichtungsvorrichtung in einer perspektivischen Darstellung,
- Fig. 2: die Dichtungsvorrichtung in einer perspektivischen Darstellung,
- Fig. 3: eine Dichteinheit der Dichtungsvorrichtung in einer perspektivischen Darstellung,
- Fig. 4: die Dichteinheit in einer schematischen Draufsicht,
- Fig. 5: die Dichteinheit in einem montierten Zustand in einer schematischen Draufsicht,
- Fig. 6: die Dichteinheit in einer schematischen Schnittdarstellung,
- Fig. 7: eine alternative Dichteinheit für die Dichtungsvorrichtung in einer perspektivischen Darstellung,
- Fig. 8: die alternative Dichteinheit in einer schematischen Schnittdarstellung,
- Fig. 9: eine Verschließeinheit für die alternative Dichteinheit in einer perspektivischen Darstellung,
- Fig. 10: eine weitere alternative Dichteinheit für die Dichtungsvorrichtung in einer perspektivischen Darstellung,
- Fig. 11: eine weitere Dichtungsvorrichtung in einer perspektivischen Darstellung,
- Fig. 12: die weitere Dichtungsvorrichtung in einer perspektivischen Schnittdarstellung,
- Fig. 13: ein erstes Dichtelement einer Dichteinheit der weiteren Dichtungsvorrichtung in einer perspektivischen Darstellung und
- Fig. 14: ein zweites Dichtelement der Dichteinheit der weiteren Dichtungsvorrichtung in einer perspektivischen Darstellung.

### Beschreibung der Ausführungsbeispiele

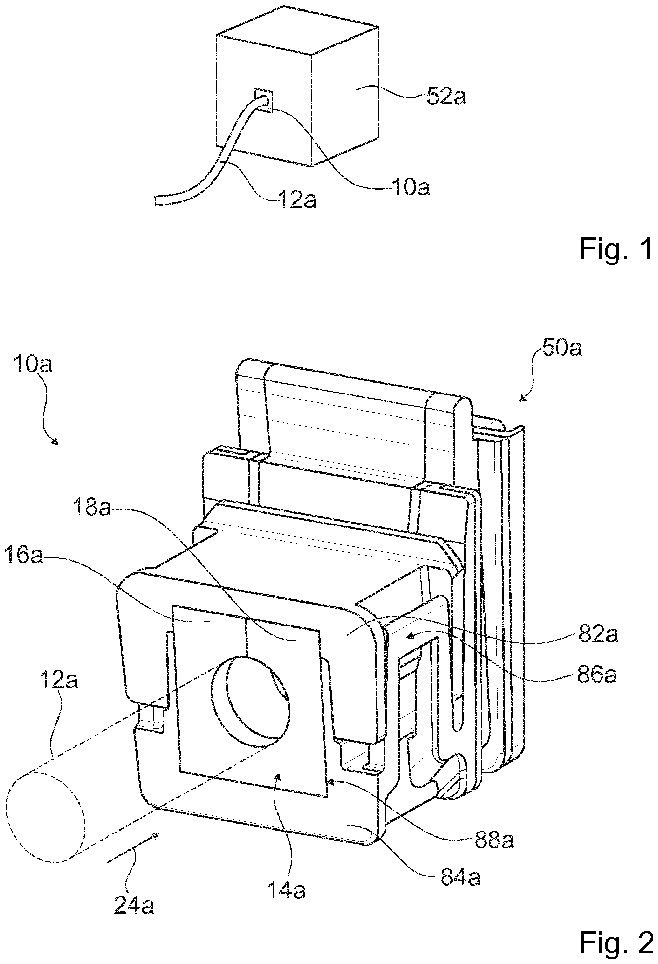

Die Figur 1 zeigt ein Gehäuse 52a mit einer Dichtungsvorrichtung 10a. Das Gehäuse 52a ist im vorliegenden Fall als ein Schaltschrank ausgebildet. Die Dichtungsvorrichtung 10a ist im vorliegenden Fall als eine Kabeldurchführungsvorrichtung ausgebildet. Die Dichtungsvorrichtung 10a ist zur Abdichtung eines durchgeführten länglichen Körpers 12a vorgesehen. Im vorliegenden Fall ist der längliche Körper 12a als ein elektrisches Kabel ausgebildet. Selbstverständlich kann in analoger Weise der längliche Körper 12a als ein fiberoptisches Kabel ausgebildet sein.

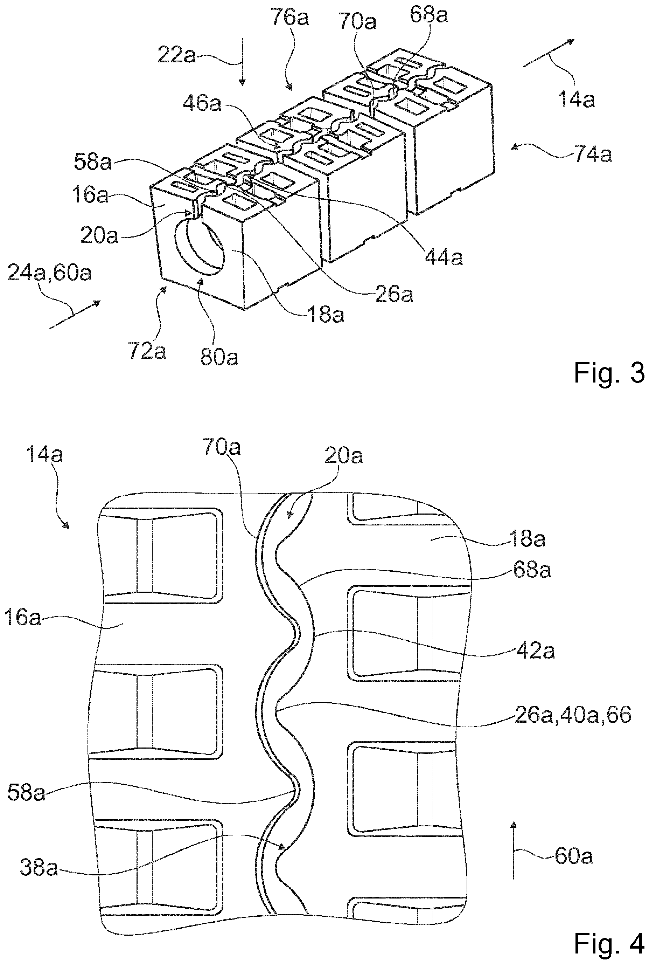

Die Figur 2 zeigt die Dichtungsvorrichtung 10a in einem montierten Zustand in einer perspektivischen Darstellung. Die Dichtungsvorrichtung 10a weist eine Dichteinheit 14a auf, die in der Figur 3 perspektivisch dargestellt ist. Ferner ist in der Figur 4 die Dichteinheit 14a in einer schematischen Draufsicht dargestellt. Die Dichteinheit 14a weist ein erstes Dichtelement 16a und ein zweites Dichtelement 18a auf, welche sich in dem montierten Zustand zumindest teilweise berühren. Das erste Dichtelement 16a und das zweite Dichtelement 18a bilden gemeinsam eine Einführung 20a aus, die zu einem Einführen des länglichen Körpers 12a in eine Einführrichtung 22a senkrecht zu einer Längsrichtung 24a des länglichen Körpers 12a vorgesehen ist. Die Einführung 20a ist auf einer Oberseite 76a der Dichteinheit 14a angeordnet. Die Dichteinheit 14a ist einstückig ausgebildet. Im vorliegenden Fall bilden das erste Dichtelement 16a und das zweite Dichtelement 18a die Dichteinheit 14a gemeinsam aus. Das erste Dichtelement 16a und das zweite Dichtelement 18a sind in einem der Einführung 20a gegenüberliegenden Bereich 80a einstückig verbunden. Im vorliegenden Fall ist die Dichteinheit 14a vollständig aus einem Gummi ausgebildet.

Die Dichteinheit 14a weist eine Durchführung 48a für den länglichen Körper 12a auf. Das erste Dichtelement 16a und das zweite Dichtelement 18a bilden die Durchführung 48a aus. Bei einer Montage wird der längliche Körper 12a entlang der Einführrichtung 22a durch die Einführung 20a in die Durchführung 48a eingeführt. Die Durchführung 48a weist eine Längsrichtung 60a auf. Die Längsrichtung 60a der Durchführung 48a entspricht im vorliegenden Fall der Längsrichtung 24a des länglichen Körpers 12a in dem montierten Zustand.

Das zweite Dichtelement 18a weist eine Erhebung 26a auf, welche die Einführung 20a zumindest abschnittsweise begrenzt. Ferner weist das erste Dichtelement 16a eine zweite Erhebung 58a auf, welche die Einführung 20a zumindest abschnittsweise begrenzt. Die Erhebung 26a und die zweite Erhebung 58a sind zumindest im Wesentlichen identisch ausgebildet. Im vorliegenden Fall weisen das erste Dichtelement 16a und das zweite Dichtelement 18a jeweils eine Mehrzahl von Erhebungen 26a beziehungsweise zweiten Erhebungen 58a auf, die aus Gründen einer Übersichtlichkeit nicht alle mit Bezugszeichen versehen sind. Die Erhebungen 26a des zweiten Dichtelements 18a sind entlang der Längsrichtung 60a der Durchführung 48a nebeneinander angeordnet. In analoger Weise sind die zweiten Erhebungen 58a des ersten Dichtelements 18a entlang der Längsrichtung 60a der Durchführung 48a nebeneinander angeordnet.

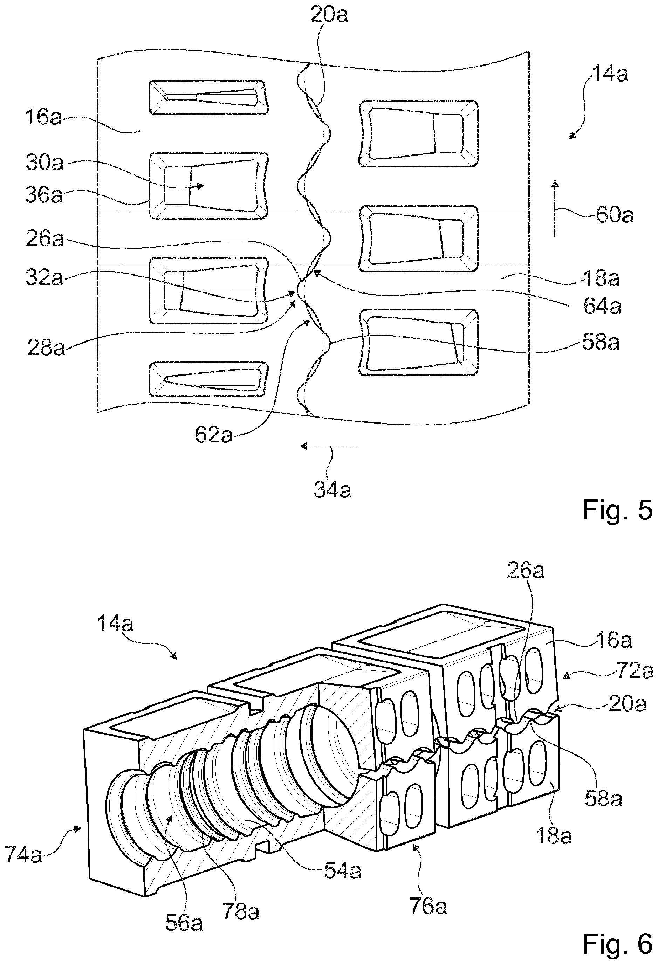

Die Figur 5 zeigt die Dichteinheit 14a in dem montierten Zustand in einer schematischen Draufsicht. Das zweite Dichtelement 18a ist dazu vorgesehen, das erste Dichtelement 16a in dem montierten Zustand in einem Bereich 28a der Erhebung 26a zumindest teilweise zu verformen. Im vorliegenden Fall wird die Erhebung 26a in dem montierten Zustand gegen das erste Dichtelement 16a gedrückt. In gleicher Weise wird in dem montierten Zustand die zweite Erhebung 58a des ersten Dichtelements 16a gegen das zweite Dichtelement 18a gedrückt und dieses entsprechend verformt. Die Einführung 20a ist in dem montierten Zustand in Bereichen 28a der Erhebungen 26a, 58a geschlossen. Neben der Erhebung 26a sind zwei Bereiche 62a, 64a angeordnet, in welchen die Einführung 20a geöffnet ist. In analoger Weise ist im vorliegenden Fall die Einführung 20a in weiteren, zu Erhebungen 26a, 58a benachbart angeordneten Bereichen geöffnet, die aus Gründen einer Übersichtlichkeit nicht mit Bezugszeichen versehen sind. Die Einführung 20a ist in dem montierten Zustand in einer Betrachtung entlang der Längsrichtung 60a der Durchführung 48a geschlossen, da die Erhebungen 26a, 58a an dem jeweils gegenüberliegenden Dichtelement 16a, 18a anliegen. Ferner ist im vorliegenden Fall die Erhebung 26a in einer Betrachtung senkrecht zu der Längsrichtung 60a der Durchführung 48a neben den Erhebungen 26a, 58a teilweise geöffnet. Es ist aber auch denkbar, dass das erste Dichtelement 16a und das zweite Dichtelement 18a in einem weiteren montierten Zustand derart fest zusammengedrückt werden, dass die Einführung 20a entlang ihrer gesamten Länge und insbesondere in Bereichen neben den Erhebungen 26a, 58a geschlossen ist. Zur Veranschaulichung einer Verformung des ersten Dichtelements 16a und des zweiten Dichtelements 18a durch die Erhebungen 26a, 58a zeigen die gestrichelten Linien in der Figur 6 die Form des ersten Dichtelements 16a und des zweiten Dichtelements 18a beziehungsweise der Einführung 20a in einem unmontierten Zustand an.

Die Erhebung 26a ist in zumindest einem unmontierten Zustand kreisbogenförmig gekrümmt. Im vorliegenden Fall weist die Erhebung 26a in einer Betrachtung senkrecht zu der Längsrichtung 60a der Durchführung 48a eine Kontur 66a auf, die einem Kreisbogen mit einem Mittelpunktswinkel von 90° entspricht.

Das erste Dichtelement 16a bildet zumindest einen Ausgleichsbereich 30a aus, der eine höhere Verformbarkeit aufweist als ein Umgebungsbereich 32a des ersten Dichtelements 16a und der dazu vorgesehen ist, in dem montierten Zustand durch das zweite Dichtelement 18a zumindest teilweise verformt zu werden. Der Ausgleichsbereich 30a ist in dem montierten Zustand betrachtet entlang einer Berührrichtung 34a, in welcher das zweite Dichtelement 18a das erste Dichtelement 16a berührt, hinter der Erhebung 26a angeordnet. Der Ausgleichsbereich 30a umfasst wenigstens eine Materialausnehmung 36a. In dem montierten Zustand wird die Erhebung 26a in die Berührrichtung 34a in dem Umgebungsbereich 32a gegen das erste Dichtelement 16a gedrückt, wodurch aufgrund seiner höheren Verformbarkeit der Ausgleichsbereich 30a verformt wird. Im vorliegenden Fall weisen das erste Dichtelement 16a und das zweite Dichtelement 18a eine Mehrzahl an Ausgleichsbereichen 30a auf, die aus Gründen einer Übersichtlichkeit nicht alle mit Bezugszeichen versehen sind. Ferner ist im vorliegenden Fall jeder Erhebung 26a, 58a jeweils ein Ausgleichsbereich 30a zugeordnet, der jeweils in dem der entsprechenden Erhebung 26a, 58a gegenüberliegenden Dichtelement 16a, 18a angeordnet ist. Selbstverständlich ist auch eine andere Anordnung von Ausgleichsbereichen denkbar, wobei beispielsweise ein Ausgleichsbereich mehreren Erhebungen und/oder mehrere Ausgleichsbereiche einer Erhebung zugeordnet und/oder Ausgleichsbereiche ohne konkrete Zuordnung angeordnet sein können. Ferner ist denkbar, dass ein Ausgleichsbereich ein Material mit einer höheren Verformbarkeit zusätzlich oder alternativ zu einer Materialausnehmung enthält. Beispielsweise können Ausgleichsbereiche Ausgleichselemente aus einer weichen Gummimischung enthalten.

Die Einführung 20a folgt in einer Betrachtung parallel zu der Einführrichtung 22a zumindest abschnittsweise einem kurvigen Verlauf 38a, insbesondere in einem unmontierten Zustand, wie etwa in den Figuren 2 und 3 gezeigt ist. Das erste Dichtelement 16a weist eine erste Seitenwand 68a auf, welche die Einführung 20a auf einer ersten Seite begrenzt. Die erste Seitenwand 68a wird teilweise von der Erhebung 26a gebildet. Das zweite Dichtelement 18a weist eine zweite Seitenwand 70a auf, welche die Einführung 20a auf einer zweiten Seite begrenzt. Insbesondere weist die erste Seitenwand 68a und/oder die zweite Seitenwand 70a den kurvigen Verlauf 38a auf. Der Verlauf 38a weist zumindest einen ersten Teilverlauf 40a mit einer ersten Krümmung und zumindest einen zweiten Teilverlauf 42a mit einer zweiten Krümmung, welche kleiner als die erste Krümmung ist, auf. Der erste Teilverlauf 40a entspricht der Kontur 66a der Erhebung 26a. Der erste Teilverlauf 40a folgt einem konvex gekrümmten Kreisbogen mit einem Mittelpunktswinkel von 90°. Der zweite Teilverlauf 42a folgt einem konkav gekrümmten Kreisbogen mit einem Mittelpunktswinkel von 90°. Der erste Teilverlauf 40a und der zweite Teilverlauf 42a grenzen aneinander an. Der Verlauf 38a ist wellenförmig ausgebildet.

Zumindest ein erster Abschnitt 44a des ersten Dichtelements 16a und zumindest ein zweiter Abschnitt 46a des zweiten Dichtelements 18a sind zueinander spiegelsymmetrisch ausgebildet. Im vorliegenden Fall sind die Seitenwände 68a, 70a zumindest an der Oberseite 76a der Dichteinheit 14a abschnittsweise spiegelsymmetrisch ausgebildet. Spiegelsymmetrische Abschnitte sind dabei entlang der Längsrichtung 60a der Durchführung 48a um einen halben Abstand zwischen zwei benachbarten Erhebungen 26a des zweiten Dichtelements 18a versetzt angeordnet.

Die Figur 5 zeigt die Dichteinheit 14a in einer perspektivischen Schnittdarstellung. Die Durchführung 48a weist einen sich verjüngenden Querschnitt auf. Im vorliegenden Fall weist die Durchführung 48a an einer Vorderseite 72a der Dichteinheit 14a ihren größten Querschnitt auf. Ferner weist die Durchführung 48a im vorliegenden Fall an einer Rückseite 74a der Dichteinheit 14a ihren kleinsten Querschnitt auf. Die Durchführung 48a ist kegelstumpfförmig ausgebildet. Die Durchführung 48a weist einen kreisförmigen Querschnitt auf. Im vorliegenden Fall ist die Dichteinheit 14a zu einem dichten Durchführen länglicher Körper 12a mit Durchmessern zwischen 9 mm und 13 mm vorgesehen.

Die Dichteinheit 14a weist eine in dem montierten Zustand an dem länglichen Körper 12a zumindest abschnittsweise anliegende Dichtfläche 54a mit einer Oberflächenstrukturierung 56a auf. Die Dichtfläche 54a bildet einen Innenmantel der Durchführung 48a. Die Oberflächenstrukturierung 56a umfasst ein rippenartiges Strukturelement 78a. Im vorliegenden Fall ist das Strukturelement 78a ringartig ausgebildet. Das Strukturelement 78a erstreckt sich entlang einer Umfangsrichtung der Durchführung 48a. Im vorliegenden Fall umfasst die Oberflächenstrukturierung 56a eine Mehrzahl ringartiger Strukturelemente 78a, die aus Gründen einer Übersichtlichkeit nicht alle mit Bezugszeichen versehen sind. In dem montierten Zustand liegen zumindest einige der Strukturelemente 78a dicht an dem länglichen Körper 12a an, insbesondere in einem Bereich der Durchführung 48a, in welchem ein Durchmesser der Durchführung 48a kleiner oder gleich einem Durchmesser des länglichen Körpers 12a ist. Zwischen den Strukturelementen 78a können in dem montierten Zustand Hohlräume entstehen, die von benachbarten Strukturelementen 78a und dem in der Durchführung 48a angeordneten länglichen Körper 12a begrenzt werden.

Wie in der Figur 2 gezeigt ist, weist die Dichtungsvorrichtung 10a eine Gehäuseeinheit 50a auf, welche dazu vorgesehen ist, in dem montierten Zustand das erste Dichtelement 16a und das zweite Dichtelement 18a gegeneinander zu drücken. Die Gehäuseeinheit 50a weist eine Oberschale 82a und eine Unterschale 84 auf, die in dem montierten Zustand die Dichteinheit 14a in Längsrichtung umgeben. Die Oberschale 82a und die Unterschale 84a sind mittels einer Rastverbindung 86a miteinander verbunden. Die Oberschale 82a und die Unterschale 84a bilden einen Aufnahmeraum 88a für die Dichteinheit 14a aus.

Bei einer Montage der Dichtungsvorrichtung 10a wird zunächst, wie oben beschrieben, der längliche Körper 12a in die Durchführung 48a der Dichteinheit 14a eingeführt. Anschließend werden das erste Dichtelement 16a und das zweite Dichtelement 18a gegeneinander gedrückt, insbesondere von der Gehäuseeinheit 50a. Die Einführung 20a wird dabei zumindest in Bereichen der Erhebungen 26a, 58a der Dichtelemente 16a, 18a dicht verschlossen. Ferner liegt die Dichtfläche 54a der Dichteinheit 14a zumindest abschnittsweise und insbesondere mit den Strukturelementen 78a der Oberflächenstrukturierung 56a der Dichtfläche 54a an dem länglichen Körper 12a an.

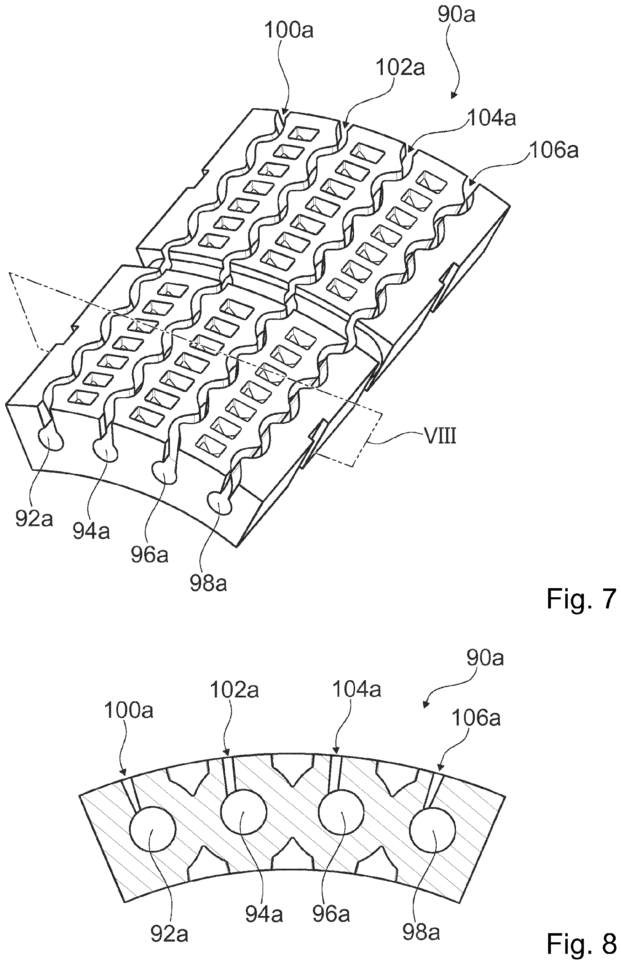

Die Figur 7 und 8 zeigen eine alternative Dichteinheit 90a für die Dichtungsvorrichtung 10a in einer perspektivischen Darstellung beziehungsweise in einer schematischen Schnittdarstellung entlang der Schnittebene VIII in der Figur 7. Die alternative Dichteinheit 90a weist vier Durchführung 92a, 94a, 96a, 98a auf. Die Durchführungen 92a, 94a, 96a, 98a weisen jeweils einen sich verjüngenden Querschnitt auf und sind für ein dichtes Durchführen von Kabeln mit einem Durchmesser von 2 mm bis 3 mm vorgesehen. Die Durchführungen 92a, 94a, 96a, 98a sind durch jeweils eine Einführung 100a, 102a, 104a, 106a zugänglich. Die Einführungen 100a, 102a, 104a, 106a sind zumindest im Wesentlichen identisch zu der Einführung 20a der Dichteinheit 14a aufgebaut. In einem montierten Zustand sind im vorliegenden Fall drei alternative Dichteinheiten 90a in dem Aufnahmeraum 88a der Gehäuseeinheit 50a anordenbar.

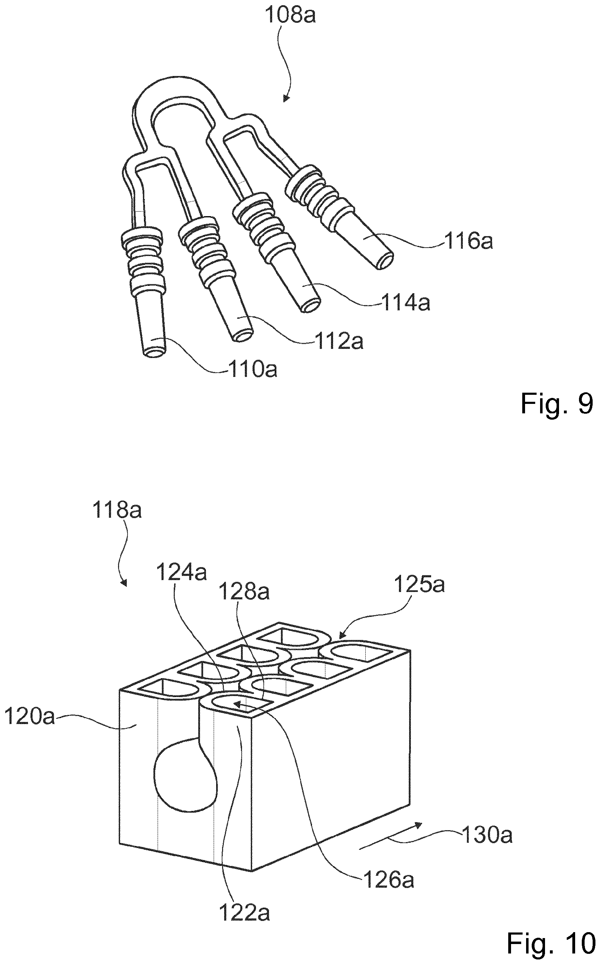

Die Figur 9 zeigt eine Verschließeinheit 108a für die alternative Dichteinheit 90a. Die Verschließeinheit 108a umfasst Verschlusspins 110a, 112a, 114a, 116a, von denen jeweils einer in eine der Durchführungen 92a, 94a, 96a, 98a der alternativen Dichteinheit 14a einführbar ist. Werden lediglich ein oder zwei oder drei Kabel durch die alternative Dichteinheit 14a geführt, können einzelne Verschlusspins 110a, 112a, 114a, 116a der Verschließeinheit 108a entfernt werden und die unbenutzten Durchführungen 92a, 94a, 96a, 98a mit den übrigen Verschlusspins 110a, 112a, 114a, 116a dicht verschlossen werden.

Die Figur 10 zeigt eine weitere alternative Dichteinheit 118a für die Dichtungsvorrichtung 10a. Die weitere alternative Dichteinheit 118a weist ein erstes Dichtelement 120a und ein zweites Dichtelement 122a auf. Das zweite Dichtelement 120a weist eine Erhebung 124a auf, welche eine Einführung 125a der weiteren alternativen Dichtungsvorrichtung 118a zumindest abschnittsweise begrenzt. Hinter der Erhebung 124a ist ein Ausgleichsbereich 126a angeordnet, der eine Materialausnehmung 128a umfasst. Das zweite Dichtelement 122a umfasst eine Mehrzahl identisch ausgebildeter Erhebungen 124a und Ausgleichsbereichen 126a, die aus Gründen einer Übersichtlichkeit nicht alle mit Bezugszeichen versehen sind. Das erste Dichtelement 120a ist spiegelsymmetrisch zu dem zweiten Dichtelement 122a ausgebildet. In einem montierten Zustand werden gegenüberliegende Erhebungen 124a des ersten Dichtelements 120a und des zweiten Dichtelements 122a gegeneinander gedrückt, wobei den Dichtelementen 120a, 122a zugeordnete Ausgleichsbereiche 126a verformt werden. In einer Betrachtung entlang einer Längsrichtung 130a der Dichteinheit 118a ist in dem montierten Zustand die Einführung 125a entlang von Berührlinien sich berührender Erhebungen 124a dicht verschlossen.

In den Figuren 10 bis 13 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des anderen Ausführungsbeispiels, insbesondere der Figuren 1 bis 9, verwiesen werden kann. Zur Unterscheidung der Ausführungsbeispiele ist der Buchstabe a den Bezugszeichen des Ausführungsbeispiels in den Figuren 1 bis 9 nachgestellt. In dem Ausführungsbeispiel der Figuren 10 bis 13 ist der Buchstabe a durch den Buchstaben b ersetzt.

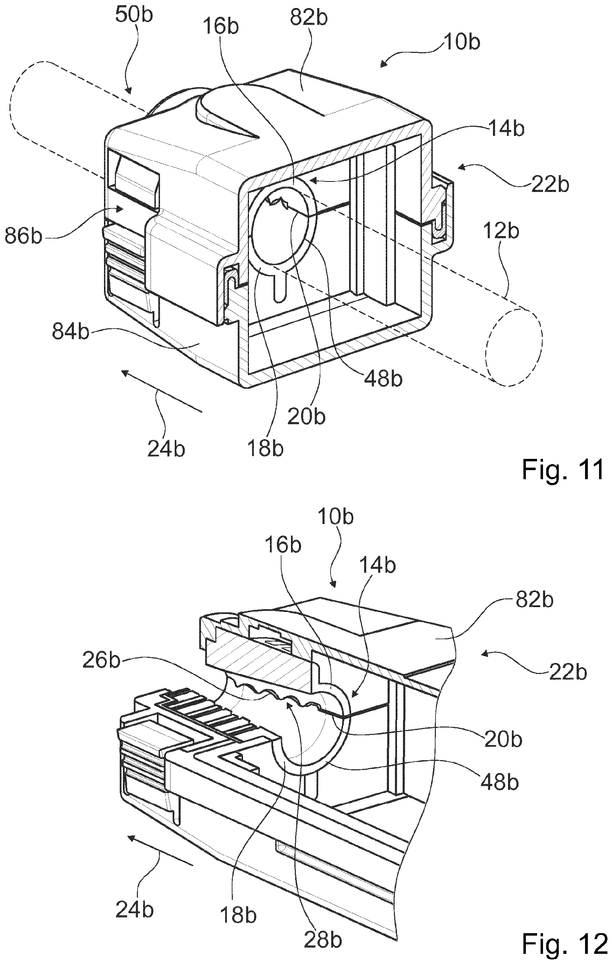

Die Figur 10 zeigt eine weitere Dichtungsvorrichtung 10b in einem montierten Zustand in einer perspektivischen Darstellung. Die Figur 11 zeigt die weitere Dichtungsvorrichtung 10b in einer perspektivischen Schnittdarstellung. Die weitere Dichtungsvorrichtung 10b ist zur Abdichtung eines durchgeführten länglichen Körpers 12b vorgesehen. Die weitere Dichtungsvorrichtung 10b weist eine Dichteinheit 14b mit einem ersten Dichtelement 16b und mit einem zweiten Dichtelement 18b auf, welche sich in dem montierten Zustand zumindest teilweise berühren und welche gemeinsam eine Einführung 20b ausbilden, die zu einem Einführen des länglichen Körpers 12b in eine Einführrichtung 22b senkrecht zu einer Längsrichtung 24b des länglichen Körpers 12b vorgesehen ist. Das zweite Dichtelement 18b weist eine Erhebung 26b auf, welche die Einführung 20b zumindest abschnittsweise begrenzt. Das erste Dichtelement 16b und das zweite Dichtelement 18b bilden gemeinsam eine Durchführung 48b für den länglichen Körper 12b aus, die einen sich verjüngenden Querschnitt aufweist.

Ferner umfasst die Dichtungsvorrichtung 10b eine Gehäuseeinheit 50b mit einer Oberschale 82b und mit einer Unterschale 84b, welche mittels einer Rastverbindung 86b miteinander verbindbar sind. In dem montierten Zustand ist die Dichteinheit 14b in der Gehäuseeinheit 50b angeordnet. Die Gehäuseeinheit 50b drückt in dem montierten Zustand das erste Dichtelement 16b und das zweite Dichtelement 18b gegeneinander. Die Erhebung 26b verformt dabei das erste Dichtelement 16b in einem Bereich 28b der Erhebung 26b

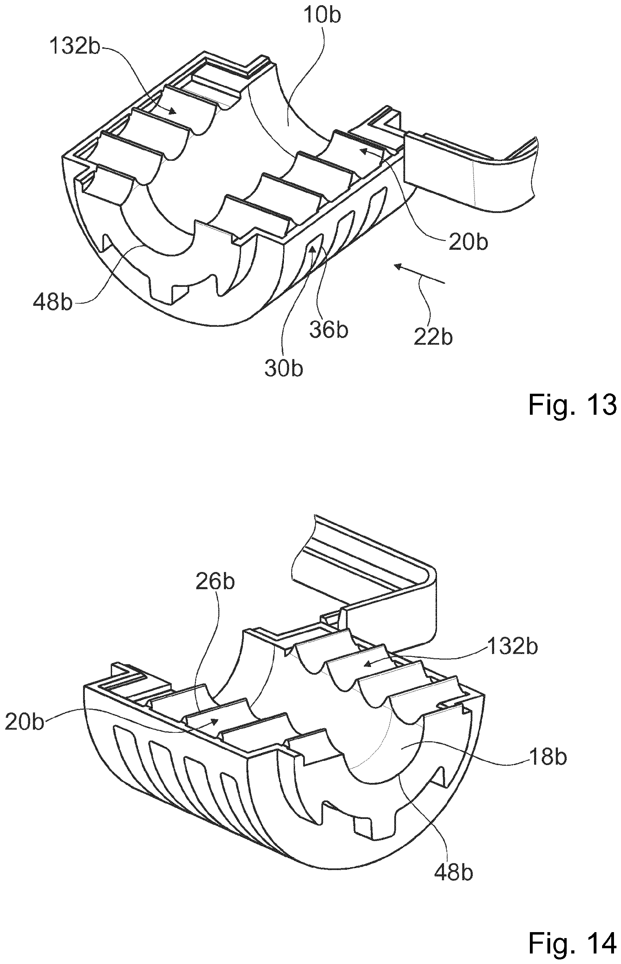

Die Figur 13 zeigt das erste Dichtelement 16b der Dichteinheit 14b der weiteren Dichtungsvorrichtung 10b in einer perspektivischen Darstellung. Die Figur 14 zeigt das zweite Dichtelement 18b der Dichteinheit 14b der weiteren Dichtungsvorrichtung 10b in eine perspektivischen Darstellung. Das erste Dichtelement 16b und das zweite Dichtelement 18b sind zu einer Montage voneinander entfernbar. Das erste Dichtelement 16b und das zweite Dichtelement 18b sind aus einem Gummi ausgebildet. Das erste Dichtelement 16b und das zweite Dichtelement 18b sind teilweise analog zu den Dichtelementen 16a, 18a aus dem Ausführungsbeispiel der Figuren 1 bis 9 ausgebildet. Insbesondere eine Geometrie der Einführung 20b beziehungsweise deren Seitenwände ist analog zu dem Ausführungsbeispiel der Figuren 1 bis 9 ausgebildet. Die Dichtelemente 16b, 18b bilden allerdings eine der Einführung 20b gegenüberliegend angeordnete weitere Einführung 132b aus. Zu einer Montage kann der längliche Körper 12b in das zweite Dichtelement 18b gelegt werden. Das erste Dichtelement 16b wird anschließend auf den länglichen Körper 12b und das erste Dichtelement 16b gelegt. Zu einem Abdichten des länglichen Körpers 12b werden das erste Dichtelement 16b und das zweite Dichtelement 18b gegeneinander gedrückt, insbesondere von der Gehäuseeinheit 50b. Erhebungen 26b der Dichtelemente 16b, 18b verformen dabei das jeweils gegenüberliegende Dichtelement 16b, 18b, wodurch ein dichter Abschluss erzielt wird. Die Dichtelemente 16b, 18b weisen Ausgleichsbereiche 30b mit Materialausnehmungen 36b auf, die aus Gründen einer Übersichtlichkeit nicht alle mit Bezugszeichen versehen sind. Die Ausgleichsbereiche 30b sind dazu vorgesehen, in dem montierten Zustand von entsprechenden Erhebungen 26b verformt zu werden.

### Bezugszeichen

- 10: Dichtungsvorrichtung
- 12: Körper
- 14: Dichteinheit
- 16: Dichtelement
- 18: Dichtelement
- 20: Einführung
- 22: Einführrichtung
- 24: Längsrichtung
- 26: Erhebung
- 28: Bereich
- 30: Ausgleichsbereich
- 32: Umgebungsbereich
- 34: Berührrichtung
- 36: Materialausnehmung
- 38: Verlauf
- 40: Teilverlauf
- 42: Teilverlauf
- 44: Abschnitt
- 46: Abschnitt
- 48: Durchführung
- 50: Gehäuseeinheit
- 52: Gehäuse
- 54: Dichtfläche
- 56: Oberflächenstrukturierung
- 58: Erhebung
- 60: Längsrichtung
- 62: Bereich
- 64: Bereich
- 66: Kontur
- 68: Seitenwand
- 70: Seitenwand
- 72: Vorderseite
- 74: Rückseite
- 76: Oberseite
- 78: Strukturelement
- 80: Bereich
- 82: Oberschale
- 84: Unterschale
- 86: Rastverbindung
- 88: Aufnahmeraum
- 90: Dichteinheit
- 92: Durchführung
- 94: Durchführung
- 96: Durchführung
- 98: Durchführung
- 100: Einführung
- 102: Einführung
- 104: Einführung
- 106: Einführung
- 108: Verschließeinheit
- 110: Verschlusspin
- 112: Verschlusspin
- 114: Verschlusspin
- 116: Verschlusspin
- 118: Dichteinheit
- 120: Dichtelement
- 122: Dichtelement
- 124: Erhebung
- 125: Einführung
- 126: Ausgleichsbereich
- 128: Materialausnehmung
- 130: Längsrichtung
- 132: Einführung

## Patentansprüche

1. Dichtungsvorrichtung (10a; 10b), insbesondere Kabeldurchführungsdichtungsvorrichtung, zur Abdichtung eines länglichen Körpers (12a; 12b) eines Kabels, mit zumindest einer Dichteinheit (14a; 14b), die zumindest ein erstes Dichtelement (16a; 16b) und zumindest ein zweites Dichtelement (18a; 18b) aufweist, welche sich in zumindest einem montierten Zustand zumindest teilweise berühren und welche gemeinsam zumindest eine Einführung (20a; 20b) ausbilden, die zu einem Einführen des länglichen Körpers (12a; 12b) in eine Einführrichtung (22a; 22b) senkrecht zu einer Längsrichtung (24a; 24b) des länglichen Körpers (12a; 12b) vorgesehen ist, wobei das zweite Dichtelement (18a; 18b) zumindest eine Erhebung (26a; 26b) aufweist, welche die Einführung (22a; 22b) zumindest abschnittsweise begrenzt, **dadurch gekennzeichnet, dass** das erste Dichtelement (16a) zumindest einen Ausgleichsbereich (30a) ausbildet, der eine höhere Verformbarkeit aufweist als ein Umgebungsbereich (32a) des Ausgleichsbereichs (30a) des ersten Dichtelements (16a) und der dazu vorgesehen ist, in dem montierten Zustand durch das zweite Dichtelement (18a) zumindest teilweise verformt zu werden.

2. Dichtungsvorrichtung (10a; 10b) nach Anspruch 1, **dadurch gekennzeichnet, dass** das zweite Dichtelement (18a; 18b) dazu vorgesehen ist, das erste Dichtelement (16a; 16b) in dem montierten Zustand in einem Bereich (28a; 28b) der Erhebung (26a; 26b) zumindest teilweise zu verformen.

3. Dichtungsvorrichtung (10a; 10b) nach einem der vorhergehenden Ansprüche, **dadurch gekennzeichnet, dass** die Erhebung (26a; 26b) in zumindest einem unmontierten Zustand kreisbogenförmig gekrümmt ist.

4. Dichtungsvorrichtung (10a; 10b) nach einem der vorhergehenden Ansprüche, **dadurch gekennzeichnet, dass** der Ausgleichsbereich (30a; 30b) in dem montierten Zustand betrachtet entlang einer Berührrichtung (34a; 34b), in welcher das zweite Dichtelement (18a; 18b) das erste Dichtelement (16a; 16b) berührt, hinter der Erhebung (26a; 26b) angeordnet ist.

5. Dichtungsvorrichtung (10a; 10b) nach einem der vorhergehenden Ansprüche, **dadurch gekennzeichnet, dass** der Ausgleichsbereich (30a; 30b) wenigstens eine Materialausnehmung (36a; 36b) umfasst.

6. Dichtungsvorrichtung (10a) einem der vorhergehenden Ansprüche, **dadurch gekennzeichnet, dass** die Einführung in einer Betrachtung parallel zu der Einführrichtung (22a) zumindest abschnittsweise einen kurvigen Verlauf (38a) aufweist.

7. Dichtungsvorrichtung (10a) nach Anspruch 6, **dadurch gekennzeichnet, dass** der Verlauf (38a) zumindest einen ersten Teilverlauf (40a) mit einer ersten Krümmung und zumindest einen zweiten Teilverlauf (42a) mit einer zweiten Krümmung, welche kleiner als die erste Krümmung ist, aufweist.

8. Dichtungsvorrichtung (10a) nach einem der vorhergehenden Ansprüche, **dadurch gekennzeichnet, dass** zumindest ein erster Abschnitt (44a) des ersten Dichtelements (16) und zumindest ein zweiter Abschnitt (46a) des zweiten Dichtelements (18a) zueinander spiegelsymmetrisch ausgebildet sind.

9. Dichtungsvorrichtung (10a; 10b) nach einem der vorhergehenden Ansprüche, **dadurch gekennzeichnet, dass** das erste Dichtelement (16a; 16b) und das zweite Dichtelement (18a; 18b) zumindest eine Durchführung (48a; 48b) mit einem sich verjüngenden Querschnitt für den länglichen Körper (12a; 12b) ausbilden.

10. Dichtungsvorrichtung (10a) nach einem der vorhergehenden Ansprüche, **dadurch gekennzeichnet, dass** die Dichteinheit (14a) zumindest eine in dem montierten Zustand an dem länglichen Körper (12a) zumindest abschnittsweise anliegende Dichtfläche (54a) mit einer Oberflächenstrukturierung (56a) aufweist.

11. Dichtungsvorrichtung (10a) nach einem der vorhergehenden Ansprüche, **dadurch gekennzeichnet, dass** die Dichteinheit (14a) einstückig ausgebildet ist.

12. Dichtungsvorrichtung (10a; 10b) nach einem der vorhergehenden Ansprüche, **gekennzeichnet durch** zumindest eine Gehäuseeinheit (50a; 50b), welche dazu vorgesehen ist, in dem montierten Zustand das erste Dichtelement (16a; 16b) und das zweite Dichtelement (18a; 18b) gegeneinander zu drücken.

13. Gehäuse (52a) mit zumindest einer Dichtungsvorrichtung (10a) nach einem der vorhergehenden Ansprüche.

14. Verfahren zur Montage einer Dichtungsvorrichtung (10a; 10b), insbesondere einer Kabeldurchführungsdichtungsvorrichtung, nach einem der Ansprüche 1 bis 12, mit zumindest einer Dichteinheit (14a; 14b), die zumindest ein erstes Dichtelement (16a; 16b) und zumindest ein zweites Dichtelement (18a; 18b) aufweist, welche gemeinsam zumindest eine Einführung (20a; 20b) ausbilden, die zu einem Einführen eines länglichen Körpers (12a; 12b) eines Kabels
in eine Einführrichtung (22a; 22b) senkrecht zu
einer Längsrichtung (24a; 24b) des länglichen Körpers (12a; 12b) vorgesehen ist, wobei das zweite Dichtelement (18a; 18b) zumindest eine Erhebung (26a; 26b) aufweist, welche die Einführung (20a; 20b) zumindest abschnittsweise begrenzt, und wobei in zumindest einem zu einem montierten Zustand führenden Montageschritt das erste Dichtelement (16a; 16b) und das zweite Dichtelement (18a; 18b) gegeneinander gedrückt werden und sich zumindest teilweise berühren, **dadurch gekennzeichnet, dass** das erste Dichtelement (16a) zumindest einen Ausgleichsbereich (30a) ausbildet, der eine höhere Verformbarkeit aufweist als ein Umgebungsbereich (32a) des Ausgleichsbereichs (30a)
des ersten Dichtelements (16a) und der in dem
montierten Zustand durch das zweite Dichtelement (18a) zumindest teilweise verformt wird.

## Claims

1. Sealing device (10a; 10b), in particular cable pass-through sealing device, for sealing an elongate body (12a; 12b) of a cable,
with at least one sealing unit (14a; 14b) comprising at least a first sealing element (16a; 16b) and at least a second sealing element (18a; 18b), which contact each other at least partially in at least one mounted state and which together form an entry (20a; 20b) that is configured for an insertion of the elongate body (12a; 12b) in an insertion direction (22a; 22b) that is perpendicular to a longitudinal direction (24a; 24b) of the elongate body (12a; 12b),
wherein the second sealing element (18a; 18b) comprises at least one elevation (26a; 26b) which delimits the entry (22a; 22b) at least section-wise, **characterised in that** the first sealing element (16a) forms at least one compensation region (30a), which has a greater deformability than a surrounding region (32a) of the compensation region (30a) of the first sealing element (16a) and which is configured to be at least partially deformed by the second sealing element (18a) in the mounted state.

2. Sealing device (10a; 10b) according to claim 1,
**characterised in that** in the mounted state the second sealing element (18a; 18b) is configured to at least partially deform the first sealing element (16a; 16b) in a region (28a; 28b) of the elevation (26a; 26b).

3. Sealing device (10a; 10b) according to one of the preceding claims,
**characterised in that** the elevation (26a; 26b) is curved in a circular-arc shape in at least one non-mounted state.

4. Sealing device (10a; 10b) according to one of the preceding claims,
**characterised in that** in the mounted state, viewed along a contact direction (34a; 34b) in which the second sealing element (18a; 18b) contacts the first sealing element (16a; 16b), the compensation region (30a; 30b) is arranged behind the elevation (26a; 26b).

5. Sealing device (10a; 10b) according to one of the preceding claims,
**characterised in that** the compensation region (30a; 30b) comprises at least one material recess (36a; 36b).

6. Sealing device (10a) according to one of the preceding claims,
**characterised in that** viewed in parallel to the insertion direction (22a), the entry has at least section-wise a sinuous course (38a).

7. Sealing device (10a) according to claim 6,
**characterised in that** the course (38a) comprises at least a first partial course (40a) with a first curvature and at least a second partial course (42a) with a second curvature which is smaller than the first curvature.

8. Sealing device (10a) according to one of the preceding claims,
**characterised in that** at least a first section (44a) of the first sealing element (16a) and at least a second section (46a) of the second sealing element (18a) are implemented mirror-symmetrically to each other.

9. Sealing device (10a; 10b) according to one of the preceding claims,
**characterised in that** the first sealing element (16a; 16b) and the second sealing element (16a; 16b) form at least one passage (48a; 48b) with a tapering cross section for the elongate body (12a; 12b).

10. Sealing device (10a) according to one of the preceding claims,
**characterised in that** the sealing unit (14a) comprises at least one sealing surface (54a) with a superficial structuring (56a), which is at least section-wise adjacent to the elongate body (12a) in the mounted state.

11. Sealing device (10a) according to one of the preceding claims,
**characterised in that** the sealing unit (14a) is implemented integrally.

12. Sealing device (10a; 10b) according to one of the preceding claims,
**characterised by** at least one housing unit (50a; 50b), which is configured to press the first sealing element (16a; 16b) and the second sealing element (18a; 18b) against each other in the mounted state.

13. Housing (52a) with at least one sealing device (10a) according to one of the preceding claims.

14. Method for mounting a sealing device (10a; 10b), in particular a cable pass-through sealing device, according to one of claims 1 to 12,
with at least one sealing unit (14a; 14b) comprising at least a first sealing element (16a; 16b) and at least a second sealing element (18a; 18b), which together form at least one entry (20a; 20b) that is configured for an insertion of an elongate body (12a; 12b) of a cable in an insertion direction (22a; 22b) perpendicular to a longitudinal direction (24a; 24b) of the elongate body (12a; 12b),
wherein the second sealing element (18a; 18b) comprises at least one elevation (26a; 26b) which delimits the entry (20a; 20b) at least section-wise and wherein, in at least one mounting step leading to a mounted state, the first sealing element (16a; 16b) and the second sealing element (18a; 18b) are pressed against each other and contact each other at least partially,
**characterised in that** the first sealing element (16a; 16b) forms at least one compensation region (30a), which has a greater deformability than a surrounding region (32a) of the compensation region (30a) of the first sealing element (16a) and which is in the mounted state at least partially deformed by the second sealing element (18a).

## Revendications

1. Dispositif d'étanchéité (10a ; 10b), en particulier dispositif d'étanchéité à passage de câble, pour l'étanchement d'un corps allongé (12a ; 12b) d'un câble,
avec au moins une unité d'étanchéité (14a ; 14b) comprenant au moins un premier élément d'étanchéité (16a ; 16b) et au moins un deuxième élément d'étanchéité (18a ; 18b), qui se contactent au moins partiellement en au moins un état monté et qui forment conjointement au moins une entrée (20a ; 20b) configurée pour insérer le corps allongé (12a ; 12b) dans une direction d'insertion (22a ; 22b) perpendiculaire à une direction longitudinale (24a ; 24b) du corps allongé (12a ; 12b),
où le deuxième élément d'étanchéité (18a ; 18b) comprend au moins une élévation (26a ; 26b) qui délimite l'entrée (22a ; 22b) au moins par sections,
**caractérisé en ce que** le premier élément d'étanchéité (16a) forme au moins une zone de compensation (30a), qui présente une déformabilité supérieure à celle d'une zone environnante (32a) de la zone de compensation (30a) du premier élément d'étanchéité (16a) et qui est configurée, en état monté, à être déformée au moins partiellement par le deuxième élément d'étanchéité (18a).

2. Dispositif d'étanchéité (10a ; 10b) selon la revendication 1,
**caractérisé en ce que** le deuxième élément d'étanchéité (18a ; 18b) est configuré, en état monté, pour déformer le premier élément d'étanchéité (16a ; 16b) dans une région (28a ; 28b) de l'élévation (26a ; 26b).

3. Dispositif d'étanchéité (10a ; 10b) selon l'une des revendications précédentes, **caractérisé en ce que** l'élévation (26a ; 26b) est courbée en forme d'un arc de cercle dans au moins un état non-monté.

4. Dispositif d'étanchéité (10a ; 10b) selon l'une des revendications précédentes, **caractérisé en ce qu'**en état monté, vue le long d'une direction de contact (34a ; 34b), dans laquelle le deuxième élément d'étanchéité (18a ; 18b) contact le premier élément d'étanchéité (16a ; 16b), la zone de compensation (30a ; 30b) est disposée derrière l'élévation (26a ; 26b).

5. Dispositif d'étanchéité (10a ; 10b) selon l'une des revendications précédentes,
**caractérisé en ce que** la zone de compensation (30a ; 30b) comprend au moins un renfoncement de matériau (36a ; 36b).

6. Dispositif d'étanchéité (10a) selon l'une des revendications précédentes, **caractérisé en ce que** vue en parallèle à la direction d'insertion (22a), l'entrée présente au moins par sections une course (38a) sinueuse.

7. Dispositif d'étanchéité (10a) selon la revendication 6,
**caractérisé en ce que** la course (38a) comporte au moins une première course partielle (40a) ayant une première courbature et au moins une deuxième course partielle (42a) ayant une deuxième courbature inférieure à la première courbature.

8. Dispositif d'étanchéité (10a) selon l'une des revendications précédentes,
**caractérisé en ce qu'**au moins une première section (44a) du premier élément d'étanchéité (16) et au moins une deuxième section (46a) du deuxième élément d'étanchéité (18a) sont réalisés à être axialement symétriques.

9. Dispositif d'étanchéité (10a ; 10b) selon l'une des revendications précédentes,
**caractérisé en ce que** le premier élément d'étanchéité (16a ; 16b) et le deuxième élément d'étanchéité (18a ; 18b) forment au moins un passage (48a ; 48b) ayant une coupe transversale rajeunissante pour le corps allongé (12a ; 12b).

10. Dispositif d'étanchéité (10a) selon l'une des revendications précédentes,
**caractérisé en ce que** l'unité d'étanchéité (14a) comporte au moins une surface d'étanchéité (54a) avec une structuration superficielle (56a), qui est au moins par sections adjacente au corps allongé (12a) en état monté.

11. Dispositif d'étanchéité (10a) selon l'une des revendications précédentes,
**caractérisé en ce que** l'unité d'étanchéité (14a) est implémenté d'une pièce.

12. Dispositif d'étanchéité (10a ; 10b) selon l'une des revendications précédentes,
**caractérisé par** au moins une unité de boîtier (50a ; 50b) configurée, en état monté, pour presser le premier élément d'étanchéité (16a ; 16b) et le deuxième élément d'étanchéité (18a ; 18b) l'un contre l'autre.

13. Boîtier (52a) avec un dispositif d'étanchéité (10a) selon l'une des revendications précédentes.

14. Procédé de montage d'un dispositif d'étanchéité (10a ; 10b), en particulier d'un dispositif d'étanchéité à passage de câble, selon l'une des revendications 1 à 12, avec au moins une unité d'étanchéité (14a ; 14b) comprenant au moins un premier élément d'étanchéité (16a ; 16b) et au moins un deuxième élément d'étanchéité (18a ; 18b) qui forment conjointement au moins une entrée (20a ; 20b) configurée pour insérer un corps allongé (12a ; 12b) d'un câble dans une direction d'insertion (22a ; 22b) perpendiculaire à une direction longitudinale (24a ; 24b) du corps allongé (12a ; 12b),
où le deuxième élément d'étanchéité (18a ; 18b) comprend au moins une élévation (26a ; 26b) qui délimite l'entrée (22a ; 22b) au moins par sections et
où, dans au moins une étape de montage résultant dans un état monté, le premier élément d'étanchéité (16a) et le deuxième élément d'étanchéité (18a) sont pressés l'un contre l'autre et se contactent au moins partiellement,
**caractérisé en ce que** le premier élément d'étanchéité (16a) forme au moins une zone de compensation (30a), qui présente une déformabilité supérieure à celle d'une zone environnante (32a) de la zone de compensation (30a) du premier élément d'étanchéité (16a) et qui est déformée au moins partiellement par le deuxième élément d'étanchéité (18a) en état monté.
